# EUROPÄISCHE PATENTANMELDUNG

(11) **EP 4 174 550 A1**
(43) Veröffentlichungstag der Anmeldung: **03.05.2023**
(21) Anmeldenummer: 21205215.3
(22) Anmeldetag: 28.10.2021
(51) Int. Cl.: G02B 13/00, G02C 13/00

(54) **VORRICHTUNG ZUM REINIGEN EINER BRILLE**

(71) Anmelder: Lasnik, Martin, 8582 Rosental an der Kainach (AT); Lasnik, Andreas, 8582 Rosental an der Kainach (AT)
(72) Erfinder: Lasnik, Martin, 8582 Rosental an der Kainach (AT); Lasnik, Andreas, 8582 Rosental an der Kainach (AT)
(74) Vertreter: Wirnsberger & Lerchbaum Patentanwälte OG

(57) **Zusammenfassung**

Die Erfindung betrifft eine Vorrichtung (1) zum Reinigen einer Brille (7), umfassend einen Behälter (2), in welchen eine Reinigungsflüssigkeit (6) und die Brille (7) einbringbar sind, einen Deckel (3) zum Verschließen des Behälters (2) sowie zumindest ein am Deckel (3) angeordnetes Element (5), mit dem die Brille (7) im Behälter (2) fixierbar ist. Um die Vorrichtung (1) dicht verschließen und auf einfache Weise reinigen zu können, ist erfindungsgemäß vorgesehen, dass das Element (5) in einem verschlossenen Zustand der Vorrichtung (1) Kontaktflächen mit dem Behälter (2) und dem Deckel (3) aufweist.

## Beschreibung

Die Erfindung betrifft eine Vorrichtung zum Reinigen einer Brille, umfassend einen Behälter, in welchen eine Reinigungsflüssigkeit und die Brille einbringbar sind, einen Deckel zum Verschließen des Behälters sowie zumindest ein am Deckel angeordnetes Element, mit dem die Brille im Behälter fixierbar ist.

Aus dem Stand der Technik sind Vorrichtungen zum Reinigen von Brillen bekannt, in welche eine Brille vollständig einbringbar ist und durch Schütteln der Vorrichtung gereinigt werden kann. Hierzu weisen die Vorrichtungen für gewöhnlich einen Behälter und einen Deckel auf, wobei in den Behälter eine Reinigungsflüssigkeit und die Brille eingebracht werden. Zum Fixieren der Brille innerhalb der Vorrichtung ergeben sich aus dem Stand der Technik zwei Varianten, wobei erstere einen im Behälter bodenseitig angeordneten und elastisch verformbaren Balg und zweitere ein auf der Innenseite des Deckels angeordnetes verformbares Element vorsieht. Die zweite Variante kann beispielsweise dem Dokument DE 86 01 566 U1 entnommen werden. Beide Varianten verhindern durch die Fixierung der Brille innerhalb der Vorrichtung eine etwaige Beschädigung der Brille während des Reinigungsvorganges.

Bei den bereits bekannten Vorrichtungen ergeben sich die Nachteile, dass beide Varianten der Vorrichtungen durch bloßes Aufschrauben des Deckels auf den Behälter abgedichtet werden und bei der ersten Variante von der Brille entfernte feste Verunreinigungen sowie Reinigungsflüssigkeitsrückstände nur schwer aus dem Behälter zu entfernen sind.

Aufgabe der Erfindung ist es, eine Vorrichtung der eingangs genannten Art bereitzustellen, welche dicht verschließbar und auf einfache Weise reinigbar ist.

Diese Aufgabe wird erfindungsgemäß gelöst, wenn bei einer Vorrichtung der eingangs genannten Art das Element in einem verschlossenen Zustand der Vorrichtung Kontaktflächen mit dem Behälter und dem Deckel aufweist.

Ein mit einer erfindungsgemäßen Vorrichtung erzielter Vorteil ist insbesondere darin zu sehen, dass die Vorrichtung im verschlossenen Zustand besonders gut abgedichtet ist.

Dementsprechend kann ein Austreten der Reinigungsflüssigkeit beim Benutzen und/oder Lagern der Vorrichtung verhindert werden. Hierzu ist das am Deckel angeordnete Element nach einem Verschließen der Vorrichtung so zwischen Deckel und Behälter positioniert, dass die Kontaktflächen des Elementes jeweils an einer Auflage- bzw. Anlagefläche des Deckels und einem oberen Rand des Behälters anliegen. Der dichtende Effekt wird dadurch erzielt, dass durch einen Anpressdruck des Deckels die Kontaktfläche des Elementes möglichst vollflächig am oberen Rand des Behälters anliegt.

In der Regel ist der Behälter zur längsseitigen Aufnahme von herkömmlichen Brillen, insbesondere Korrektionsbrillen und Sonnenbrillen, ausgebildet und weist bevorzugt eine oben offene zylindrische Formgebung mit kreisrunder Grundfläche und im Wesentlichen konstantem freien Innendurchmesser auf. Dabei definiert ein oberer Rand des Behälters eine Öffnung des Behälters. Überdies ist der Behälter sowohl außenseitig als auch innenseitig mit einer glatten Oberfläche ausgebildet. Die außenseitige Oberfläche des Behälters kann aber auch strukturiert sein, um während des Benutzens der Vorrichtung eine bessere Haftung an der Hand des Benutzers zu erreichen. Auch zur lösbaren Befestigung des Deckels, beispielsweise über einen Schraubverschluss, kann an der Außenseite eine Struktur wie ein Gewinde vorgesehen sein.

Außerdem kann ein Durchmesser des Behälters entlang einer Längsrichtung zur Grundfläche hin abnehmen, wodurch sich eine konische Formgebung ergibt und eine Bewegung der Brille entlang einer Querrichtung des Behälters begrenzt ist. Für gewöhnlich weist der Behälter entlang der Längsrichtung eine gleichbleibende Wandstärke auf. Allerdings kann es zum Begrenzen der Bewegung der Brille in Querrichtung des Behälters von Vorteil sein, wenn die Wandstärke des Behälters entlang der Längsrichtung variiert, sodass sich trotz zylindrischer Formgebung und außenseitig gleichbleibendem Durchmesser innenseitig eine konische Formgebung des Behälters mit zur Grundfläche hin abnehmendem Durchmesser ergibt.

Zudem hat es sich bewährt, dass der Behälter nahe des oberen Randes außenseitig mit einem Gewinde versehen ist, über welches der Deckel auf den Behälter geschraubt werden kann. Unterhalb des Gewindes kann der Behälter mit einer, insbesondere keilförmigen, Verdickung versehen sein, um einen besonders glatten bzw. bündigen Übergang zwischen Behälter und Deckel zu erzielen.

Für eine Reinigung einer Brille wird in den Behälter eine Reinigungsflüssigkeit eingebracht, in welcher auf der Brille befindliche Verunreinigungen gelöst und/oder aufgenommen werden können. Alternativ kann auch zuerst Wasser und anschließend ein festes oder flüssiges Reinigungsmittel in den Behälter eingebracht werden, sodass die Reinigungsflüssigkeit erst beim Benutzen der Vorrichtung gebildet wird. Liegt ein Füllstand der Reinigungsflüssigkeit bei 25 % bis 75 %, bevorzugt 30 % bis 60 %, besonders bevorzugt 35 % bis 55 %, des Behältervolumens, kann eine besonders zeitsparende Reinigung der Brille erzielt werden. Dies liegt darin begründet, dass die Brille beim Schütteln der Vorrichtung von der Reinigungsflüssigkeit besonders effizient umspült werden kann. Zweckmäßigerweise ist außen- oder innenseitig auf dem Behälter eine Markierung vorgesehen, um den bevorzugten Füllstand anzugeben. Dadurch kann bei wiederholter Benutzung der Vorrichtung mittels optischer Kontrolle des Füllstandes ein gleichbleibendes Reinigungsergebnis erzielt werden.

Üblicherweise ist der Behälter mit einer Höhe von 13 cm bis 30 cm, bevorzugt 13 cm bis 25 cm, besonders bevorzugt 14 cm bis 20 cm, und einem Durchmesser von 4 cm bis 15 cm, bevorzugt 5 cm bis 12 cm, besonders bevorzugt 6 cm bis 10 cm, ausgebildet. Dadurch können Brillen unterschiedlichster Formen vollständig im Behälter aufgenommen werden, ehe dieser mit dem Deckel verschlossen wird. Dabei wird eine Erstreckung des Behälters in Längsrichtung als Höhe des Behälters angesehen.

Der Deckel weist an der Innenseite für gewöhnlich ein Gewinde auf, über welches dieser mit dem Behälter verschraubbar ist. Außerdem ist das Element so am Deckel angeordnet, dass dieses die Brille im Behälter fixieren kann. Daher ist es zweckmäßig, wenn das Element an einer Innenseite des Deckels angeordnet ist und entlang der Längsrichtung des Behälters in den Behälter ragt.

Zum Reinigen der Brille wird die Vorrichtung im verschlossenen Zustand mit darin befindlicher Reinigungsflüssigkeit und Brille geschüttelt, wobei die Reinigungsflüssigkeit die Brille umspült und flüssige wie feste Verunreinigungen von der Brille gelöst werden. Anschließend wird die Vorrichtung geöffnet, die Brille aus dem Behälter entnommen und mit einem Tuch trocken gewischt. In der Regel ist eine Reinigungswirkung des Tuches bei einer derartigen Reinigung der Brille nicht erforderlich, dieses dient lediglich zum Entfernen von Flüssigkeitsrückständen.

Mit Vorteil ist vorgesehen, dass das Element nachgiebig, insbesondere verformbar, bevorzugt elastisch verformbar, ausgebildet ist. Hierdurch sind Brillen unterschiedlichster Größen im Behälter fixierbar, ohne eine Beschädigung der Brille befürchten zu müssen. In der Regel wird nach einem Befüllen des Behälters mit Reinigungsflüssigkeit die Brille entlang einer Längsachse der Brille in diesen eingebracht. Dabei wird die Brille zwar vollständig aber sowohl entlang einer Längsrichtung als auch einer Querrichtung des Behälters bewegbar im Behälter aufgenommen. Erst beim Verschließen des Behälters mit dem Deckel wird das Element gegen die Brille gedrückt und diese im Behälter fixiert. Hierbei passt sich das nachgiebig ausgebildete Element bereichsweise oder punktuell an eine Form der Brille an und fixiert diese derart im Behälter, dass eine Bewegung der Brille entlang der Längsachse und/oder der Querachse des Behälters verhindert ist. Vorzugsweise verhindert das Element Bewegungen der Brille sowohl entlang der Längsachse als auch der Querachse des Behälters, wodurch sämtliche Bestandteile der Brille während des Schüttelns der Vorrichtung geschützt sind.

Darüber hinaus dichten die Kontaktflächen des nachgiebig ausgebildeten Elementes den Behälter auf besonders effiziente Weise ab. Dies kann dadurch erreicht werden, dass beim Verschließen des Behälters ein Anpressdruck des Deckels über die Kontaktfläche zwischen Element und Deckel auf die Kontaktfläche zwischen Element und Behälter übertragen wird. Durch die nachgiebige, insbesondere die verformbare, Ausbildung des Elementes kann die Kontaktfläche des Elementes den oberen Rand des Behälters vollflächig abdecken, um eine besonders hohe Dichtheit der Vorrichtung sicherzustellen.

Zweckmäßigerweise ist das Element aus einem Kunststoff, insbesondere einem Elastomer, gebildet. Hierdurch kann das Element auch in unterschiedlichen Formen auf besonders einfache Weise hergestellt werden. Dabei wird das Element bevorzugt durch ein Spritz-, Extrusions- oder Blasverfahren aus Kunststoff, insbesondere einem Elastomer, hergestellt. Aus Kunststoff hergestellte Elemente bieten zudem den Vorteil, dass diese auch bei regelmäßiger Deformierung und/oder starker mechanischer Beanspruchung eine besonders hohe Lebensdauer aufweisen.

Alternativ kann das Element auch bereichsweise aus oder mit einem anderen Material gebildet sein, beispielsweise einem Metall oder einer Legierung wie ein Federstahl. Bevorzugt ist das Material aber einteilig aus einem Kunststoff gefertigt.

Es hat sich bewährt, dass das Element topfförmig mit einem Boden und einer Seitenwand ausgebildet ist. Dadurch liegt das Element mit dem Boden großflächig an der Brille an, wodurch diese besonders effizient im Behälter fixiert werden kann. Der Boden des topfförmigen Elementes weist für gewöhnlich dieselbe Form wie der Querschnitt des Behälters auf. Um die Brille mit dem Element möglichst effizient zu fixieren, dieses aber trotzdem einfach in den Behälter einführen zu können, weist der Boden des Elementes maximal 95 %, bevorzugt maximal 90 %, besonders bevorzugt maximal 85 %, des Durchmessers der Öffnung des Behälters auf. Die Seitenwand schließt mit dem Boden einen Winkel von 90° bis 130°, bevorzugt von 90° bis 110°, besonders bevorzugt von 90° bis 95°, ein. Üblicherweise sind Boden und Seitenwand integral ausgebildet, wobei ein Übergang zwischen Boden und Seitenwand abgerundet ausgebildet ist. Die Seitenwand erstreckt sich vom Boden in die Höhe, sodass das Element höchstens 50 %, bevorzugt höchstens 40 %, besonders bevorzugt höchstens 30 % einer Höhe des Behälters aufweist. Zudem bilden Boden und Seitenwand des Elementes ein Volumen, in welchem Objekte aufgenommen werden können.

Vorzugsweise weist das Element an einem oberen Ende der Seitenwand einen Wulst auf. Hierdurch kann der Behälter vom Element auf besonders effiziente Weise abgedichtet werden, da der Wulst als Dichtung wirkt. Für gewöhnlich sind Boden und Seitenwand des Elementes mit derselben Wandstärke ausgebildet. Entsprechend kann der Wulst als Verdickung des Elementes am oberen Ende der Seitenwand ausgebildet sein, wobei der Wulst bevorzugt einen eckigen Querschnitt aufweist, und zumindest bereichsweise am Behälter anliegt.

Es ist bevorzugt, dass der Wulst integral mit dem Element ausgebildet ist. Durch eine derartige Ausbildung kann das Element auf besonders einfache Weise hergestellt werden. Zudem kann das Element im Falle einer Beschädigung besonders leicht ausgetauscht werden. Dabei sind Wulst und Element aus demselben Material, insbesondere einem Kunststoff, bevorzugt einem Elastomer, gebildet. Folglich können Wulst und Element in einem Arbeitsgang, insbesondere durch Spritz-, Extrusions- oder Blasverfahren, hergestellt werden.

Mit Vorteil ist vorgesehen, dass der Wulst ringförmig ausgebildet ist und das Element, insbesondere vollumfänglich, umgibt. Dadurch kann sichergestellt werden, dass das Element zentriert am Deckel angeordnet ist. In diesem Fall wirkt der Wulst als Abstandhalter und umgibt das obere Ende der Seitenwand vorzugsweise vollumfänglich. Hierbei kann ein Außendurchmesser des Wulstes mit einem Innendurchmesser des Deckels korrespondieren, sodass der Wulst bündig an der Innenseite des Deckels anliegt. Entsprechend wird das Element beim Anordnen an der Innenseite des Deckels automatisch zentriert.

Bevorzugt ist vorgesehen, dass der Wulst in einer Seitenansicht des Elementes von der Seitenwand vorragt und eine Ausnehmung aufweist. Hierdurch kann der Behälter besonders dicht abgeschlossen und das Element besonders sicher am Deckel angeordnet werden. Üblicherweise ragt der Wulst von der Seitenwand des Elementes derart vor, dass dieser mit der Seitenwand einen Winkel von 90° einschließt. Das Element mit vorragendem Wulst kann innenseitig am Deckel angeordnet werden, indem ein auf der Innenseite des Deckels vorgesehener Vorsprung in der nach außen ragenden und einer seitlichen Innenfläche des Deckels zugewandten Ausnehmung des Wulstes aufgenommen wird. Folglich bildet ein Teil der Ausnehmung des Wulstes jene Kontaktfläche des Elementes, welche an der Auflagefläche des Deckels anliegt. Diese Verbindung von Deckel und Element kann abhängig von der Ausbildung des Wulstes bereichsweise oder vollumfänglich erfolgen, wobei eine vollumfängliche Verbindung bevorzugt ist. Zudem ragt der Wulst von der Seitenwand des Elementes vor, sodass dieser im verschlossenen Zustand der Vorrichtung am oberen Rand des Behälters anliegt. Demnach kann eine Unterseite des Wulstes die Kontaktfläche des Elementes bilden, welche dichtend am oberen Rand des Behälters anliegt.

Vorzugsweise ist ein oberer Rand des Behälters durch den Wulst, insbesondere vollumfänglich, abdeckbar. Hierdurch wird eine besonders effiziente Abdichtung des Behälters sichergestellt. Ein derart gestalteter Wulst deckt den oberen Rand des Behälters ab und dichtet den Behälter im verschlossenen Zustand der Vorrichtung dadurch ab, dass der Wulst an den oberen Rand des Behälters gepresst wird. Eine besonders große Dichtfläche und damit auch eine besonders gute Abdichtung des Behälters kann dann erzielt werden, wenn der obere Rand des Behälters vollumfänglich vom Wulst abdeckt wird.

Es ist von Vorteil, wenn der Wulst bündig mit dem oberen Rand des Behälters abschließt. Dadurch kann eine besonders effiziente Abdichtung bei gleichzeitig kompakten Abmessungen erzielt werden. Schließt der Wulst bündig mit dem oberen Rand des Behälters ab, kann der gesamte obere Rand des Behälters als Dichtfläche genutzt werden. Zudem muss bei einer derartigen Ausbildung des Wulstes keine Vertiefung im Deckel vorgesehen sein, um den Wulst im Deckel aufnehmen zu können. Daher kann der Deckel bei gleichbleibend guter Abdichtung des Behälters besonders kompakt, insbesondere mit geringer Wandstärke, ausgebildet sein.

Es hat sich bewährt, dass der Wulst in einem verschlossenen Zustand der Vorrichtung zumindest bereichsweise zwischen Behälter und Deckel eingeklemmt ist. Hierdurch wird der Behälter beim Verschließen automatisch abgedichtet. In der Regel ist der Wulst dazu derart am Element angeordnet, dass dieser sowohl die Kontaktfläche zum Deckel als auch die Kontaktfläche zum Behälter ausbildet. Durch Verschließen des Behälters mit dem Deckel wird der Wulst zwischen Behälter und Deckel eingeklemmt, sodass der Wulst den Behälter beim Verschließen abdichtet.

In bevorzugter Weise ist der Deckel mehrteilig mit einem Ring und einer Platte ausgebildet. Hierdurch ist das Volumen des Elementes zugänglich. Der Ring kann dafür innenseitig ein Gewinde zum Aufschrauben des Deckels auf den Behälter, einen Vorsprung zum Anordnen des Elementes und an einem oberen Ende einen Rücksprung aufweisen. Der Rücksprung ist zur Innenseite des Ringes hin orientiert und ermöglicht die formschlüssige Aufnahme der Platte, wobei der Rücksprung vorzugsweise vollumfänglich am oberen Ende des Ringes angeordnet ist. Die Platte weist eine kreisförmige Grundfläche und eine mit dem Rücksprung korrespondierende Höhe auf. Hierdurch kann die im Rücksprung formschlüssig aufgenommene Platte bündig mit dem Ring abschließen. Darüber hinaus ist in der Platte zumindest eine Öffnung vorgesehen, über welche ein beim Nachgeben des Elementes entstehender Druck entweichen kann. Außerdem kann die Platte eine Vertiefung oder eine Erhöhung aufweisen, über welche die Platte auf einfache Weise vom Ring entfernt werden kann. Dadurch wird bei topfförmiger Ausbildung des Elementes das Volumen des Elementes zugänglich, in welchem Reinigungsmittel oder andere Objekte aufbewahrt werden können. Folglich kann mit einem derart ausgebildeten Deckel ohne zusätzliches Transportbehältnis für das Reinigungsmittel ortsunabhängig frische Reinigungsflüssigkeit hergestellt werden. Vorzugsweise ist vorgesehen, dass der Deckel innenseitig mit einem Vorsprung und das Element mit einer korrespondierenden Ausnehmung ausgebildet sind, sodass Element und Deckel formschlüssig verbindbar sind. Hierdurch ist eine feste Verbindung zwischen Element und Deckel sichergestellt. Ist das Element nachgiebig, insbesondere verformbar, ausgebildet, kann die formschlüssige Verbindung zwischen Deckel und Element lösbar sein. Entsprechend können Element oder Deckel im Falle einer Beschädigung besonders einfach ausgetauscht werden, ohne dass beide Teile erneuert werden müssen. Zudem ermöglicht die formschlüssige Verbindung zwischen Deckel und Element, dass der am Vorsprung angrenzende Bereich des Elementes durch den Vorsprung verstärkt ist. Dies bewirkt insbesondere dann einen Vorteil, wenn jener Bereich des Elementes nachgiebig ausgebildet ist und am oberen Rand des Behälters anliegt. Dadurch bildet jener Bereich die Kontaktfläche des Elementes und dichtet den Behälter beim Verschließen ab. Ist der Deckel mehrteilig mit einem Ring und einer Platte ausgebildet, kann der Vorsprung am Ring angeordnet sein und der Behälter auf dieselbe Weise auch ohne am Ring angebrachte Platte dichtend verschlossen werden.

Mit Vorteil ist vorgesehen, dass der Deckel kraftschlüssig, insbesondere durch Verschrauben, mit dem Behälter verbindbar ist. Dadurch wird ein besonders einfaches und schnelles Verschließen des Behälters erzielt. Hierzu weisen Deckel und Behälter Gewinde auf, wobei der Behälter bereits bei einer Drehung des Deckels um 90° vollständig verschließbar ist. Vorzugsweise ist das Gewinde des Deckels innenseitig und das Gewinde des Behälters außenseitig angeordnet.

Es hat sich bewährt, dass der Behälter und der Deckel aus Kunststoff, insbesondere aus einem Thermoplast, gebildet sind. Dadurch sind Behälter und Deckel schnell und kostengünstig herstellbar. Für gewöhnlich werden derartige Behälter und Deckel durch Herstellungsverfahren wie Spritzgießen, Extrusion oder Blasformen erhalten. Entsprechend können Behälter und/oder Deckel in verschiedensten Farben und Formen hergestellt werden. Der hierzu eingesetzte Kunststoff weist bevorzugt eine hohe Formstabilität und Chemikalienbeständigkeit auf. Zudem ist es von Vorteil, wenn der Behälter und der Deckel aus einem festeren Material als das Element gebildet sind.

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
Fig. 1 eine schematische perspektivische Darstellung einer erfindungsgemäßen Vorrichtung;
Fig. 2 eine Frontansicht der Vorrichtung gemäß Fig. 1;
Fig. 3 einen Schnitt entlang der Linie III-III in Fig. 2;
Fig. 4 eine perspektivische Darstellung der Vorrichtung gemäß Fig. 1 in geöffnetem Zustand;
Fig. 5 eine perspektivische Darstellung der Vorrichtung gemäß Fig. 1 in geöffnetem Zustand samt Reinigungsflüssigkeit und Brille;
Fig. 6 eine perspektivische Darstellung der Vorrichtung gemäß Fig. 1 während einer Benutzung.

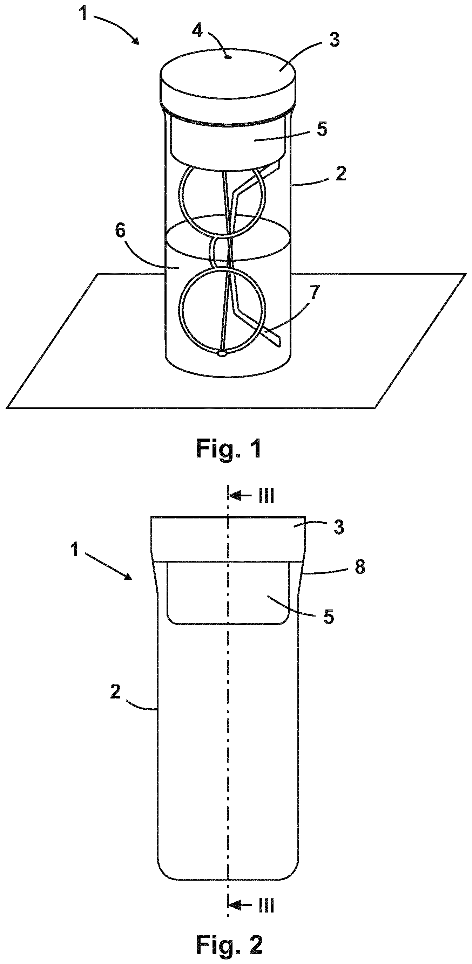

In Fig. 1 bis Fig. 6 sind, sofern es sich nicht um Querschnitte handelt, für ein besseres Verständnis die an sich nicht sichtbaren Teile innerhalb eines Behälters 2 ebenfalls dargestellt.

In Fig. 1 ist eine perspektivische Darstellung einer erfindungsgemäßen Vorrichtung 1 gezeigt. Hierbei ist ein Behälter 2 mit darin befindlicher Reinigungsflüssigkeit 6 ersichtlich, in welchen eine Brille 7 eingebracht ist. Der Behälter 2 weist eine zylindrische Formgebung mit einer Höhe von ca. 20 cm und einem im Wesentlichen über die gesamte Höhe gleichbleibenden kreisrunden Durchmesser von ca. 6 cm auf. Ein oberer Rand sowie ein Gewinde 9 des Behälters 2 sind in dieser Darstellung wegen eines aufgeschraubten Deckels 3 nicht erkennbar. Jedoch ist ersichtlich, dass der Behälter 2 durch den Deckel 3 verschlossen und an einer Oberseite des Deckels 3 eine Öffnung 4 vorgesehen ist. Zudem ist am Deckel 3 ein Element 5 angeordnet, welches in den Behälter 2 hineinragt und eine Höhe von ca. 20 % der Höhe des Behälters 2 aufweist. Außerdem ist erkennbar, dass das Element 5 nachgiebig ausgebildet ist und an der Brille 7 anliegt, um diese im Behälter 2 zu fixieren. Durch die Öffnung 4 des Deckels 3 findet bei einer Verformung des Elementes 5 ein Druckausgleich statt, um Beschädigungen der Brille 7 zu vermeiden.

Fig. 2 zeigt die Vorrichtung 1 gemäß Fig. 1 in einer Frontansicht. In dieser Ansicht sind Behälter 2, Deckel 3 und Element 5 dargestellt und Proportionen dieser Teile besser erkennbar und vergleichbar. Der Behälter 2 ist bodenseitig flach ausgebildet und weist an einem Übergang zum Deckel 3 eine keilförmige Verdickung 8 auf. Der Deckel 3 weist zum Behälter 2 hin eine Verjüngung auf, sodass der Übergang zwischen Behälter 2 und Deckel 3 in einem verschlossenen Zustand der Vorrichtung 1 gleichmäßig und eben verläuft. Zudem ist gezeigt, dass das Element 5 zentral am Deckel 3 angeordnet ist und von Wänden des Behälters 2 beabstandet in den Behälter 2 ragt.

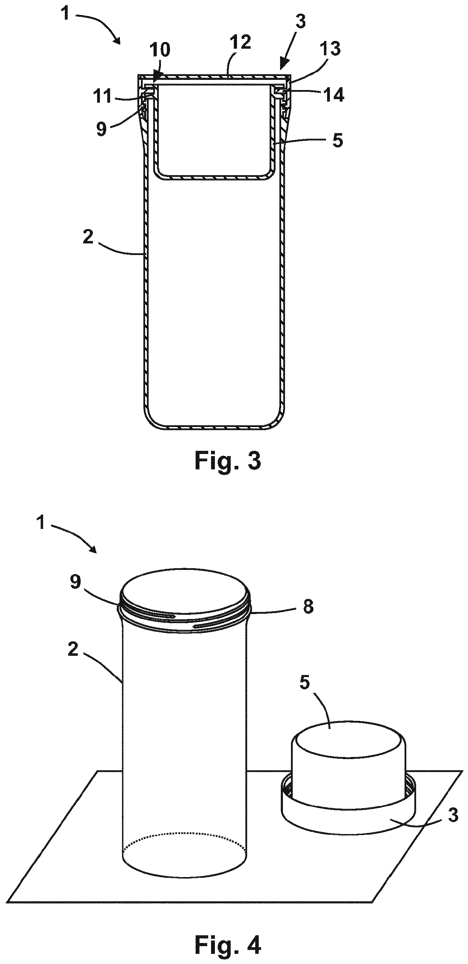

In Fig. 3 ist ein Schnitt entlang der Linie III-III in Fig. 2 dargestellt. Hierdurch ist ein Aufbau des Deckels 3 samt Element 5 sowie ein Übergang zwischen Deckel 3 und Behälter 2 detaillierter erkennbar. Der Deckel 3 umfasst einen Ring 13 und eine Platte 12, wobei der Ring 13 einen Rücksprung aufweist, in welchem die Platte 12 formschlüssig aufgenommen ist. Darüber hinaus sind am Ring 13 und nahe des oberen Randes des Behälters 2 Gewinde 9 vorgesehen, um Deckel 3 und Behälter 2 kraftschlüssig verbinden zu können. Außerdem ist der Ring 13 mit einem Vorsprung 14 versehen, der mit dem Element 5 in Verbindung steht. Das Element 5 ist einteilig und topfförmig ausgebildet und weist einen Boden, eine Seitenwand sowie einen am oberen Ende der Seitenwand angeordneten Wulst 10 auf. Dieser Wulst 10 ragt über die Seitenwand des Elementes 5 vor, ist mit einer Ausnehmung 11 versehen und schließt mit dem oberen Rand des Behälters 2 bündig ab. Zudem ist der Vorsprung 14 des Ringes 13 in der Ausnehmung 11 des Wulstes 10 aufgenommen, wodurch das Element 5 zentriert im Deckel 3 positioniert und eine formschlüssige Verbindung zwischen Deckel 3 und Element 5 hergestellt ist. Dementsprechend befindet sich in der Ausnehmung 11 des Wulstes 10 eine Kontaktfläche des Elementes 5, über welche dieses am Deckel 3, hier dem Vorsprung 14 des Ringes 13, anliegt. Jene Kontaktfläche des Elementes 5, über welche dieses am oberen Rand des Behälters 2 anliegt, ist durch eine Unterseite des Wulstes 10 gebildet. Beim Aufschrauben des Deckels 3 wird der Wulst 10 zwischen den Vorsprung 14 des Ringes 13 und den oberen Rand des Behälters 2 geklemmt, wobei das verformbare Element 5 und insbesondere der Wulst 10 den oberen Rand des Behälters 2 abdichtet. In dieser Ausbildungsvariante kann der obere Rand des Behälters 2 durch einen entsprechend hohen Anpressdruck des Deckels 3 über die Kontaktfläche auf der Unterseite des Wulstes 10 luftdicht abgedichtet werden.

Fig. 4 zeigt eine perspektivische Darstellung der Vorrichtung 1 gemäß Fig. 1 in geöffnetem Zustand. Hierdurch sind Details um den oberen Rand des Behälters 2, welche im verschlossenen Zustand der Vorrichtung 1 vom Deckel 3 verdeckt sind, erkennbar. Entsprechend sind der obere Rand, welcher beim Verschließen des Behälters 2 über die Kontaktfläche des Elementes 5 abgedichtet wird, und das Gewinde 9 des Behälters 2 ersichtlich. Zudem kann die keilförmige, nach außen verlaufende Verdickung 8 des Behälters 2 erkannt werden. Rechterhand ist der Deckel 3 mit Element 5 zu sehen, wobei in dieser Darstellung eine Beabstandung der Seitenwand des Elementes 5 vom Deckel 3 besonders gut erkennbar ist.

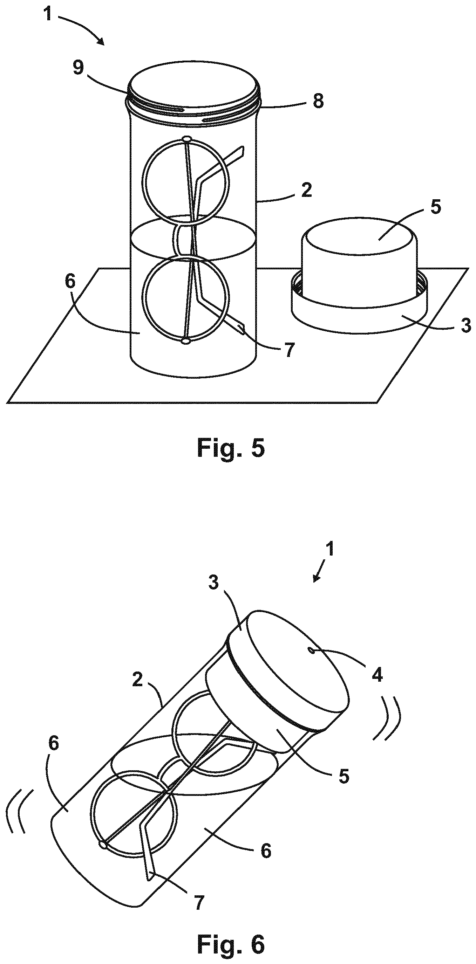

In Fig. 5 ist eine perspektivische Darstellung der Vorrichtung 1 gemäß Fig. 1 in geöffnetem Zustand samt Reinigungsflüssigkeit 6 und Brille 7 gezeigt. Hierbei ist Reinigungsflüssigkeit 6 in den Behälter 2 eingebracht und die Brille 7 vollständig in diesem aufgenommen. Zum Reinigen der Brille 7 wird der rechterhand dargestellte Deckel 3 mit dem Behälter 2 verschraubt, wobei der Behälter 2 über die Kontaktfläche des Elementes 5 am oberen Rand des Behälters 2 abgedichtet wird. Gleichzeitig wird die Brille 7 durch die topfförmige und nachgiebige Ausbildung des Elementes 5 im Behälter 2 fixiert, um eine Beschädigung der Brille 7 zu vermeiden. Folglich kann der Behälter 2 zum Reinigen der Brille 7 wie in Fig. 6 dargestellt geschüttelt werden. Anschließend wird die Vorrichtung 1 geöffnet, die gereinigte Brille 7 aus dem Behälter 2 entnommen und mit einem Tuch trocken gewischt.

## Patentansprüche

1. Vorrichtung (1) zum Reinigen einer Brille (7), umfassend einen Behälter (2), in welchen eine Reinigungsflüssigkeit (6) und die Brille (7) einbringbar sind, einen Deckel (3) zum Verschließen des Behälters (2) sowie zumindest ein am Deckel (3) angeordnetes Element (5), mit dem die Brille (7) im Behälter (2) fixierbar ist, **dadurch gekennzeichnet, dass** das Element (5) in einem verschlossenen Zustand der Vorrichtung (1) Kontaktflächen mit dem Behälter (2) und dem Deckel (3) aufweist.

2. Vorrichtung (1) nach Anspruch 1, **dadurch gekennzeichnet, dass** das Element (5) nachgiebig, insbesondere verformbar, bevorzugt elastisch verformbar, ausgebildet ist.

3. Vorrichtung (1) nach Anspruch 1 oder 2, **dadurch gekennzeichnet, dass** das Element (5) aus einem Kunststoff, insbesondere einem Elastomer, gebildet ist.

4. Vorrichtung (1) nach einem der Ansprüche 1 bis 3, **dadurch gekennzeichnet, dass** das Element (5) topfförmig mit einem Boden und einer Seitenwand ausgebildet ist.

5. Vorrichtung (1) nach Anspruch 4, **dadurch gekennzeichnet, dass** das Element (5) an einem oberen Ende der Seitenwand einen Wulst (10) aufweist.

6. Vorrichtung (1) nach Anspruch 5, **dadurch gekennzeichnet, dass** der Wulst (10) und das Element (5) einteilig ausgebildet sind.

7. Vorrichtung (1) nach Anspruch 5 oder 6, **dadurch gekennzeichnet, dass** der Wulst (10) ringförmig ausgebildet ist und das Element (5), insbesondere vollumfänglich, umgibt.

8. Vorrichtung (1) nach einem der Ansprüche 5 bis 7, **dadurch gekennzeichnet, dass** der Wulst (10) in einer Seitenansicht des Elementes (5) von der Seitenwand vorragt und eine Ausnehmung (11) aufweist.

9. Vorrichtung (1) nach einem der Ansprüche 5 bis 8, **dadurch gekennzeichnet, dass** ein oberer Rand des Behälters (2) durch den Wulst (10), insbesondere vollumfänglich, abdeckbar ist.

10. Vorrichtung (1) nach Anspruch 9, **dadurch gekennzeichnet, dass** der Wulst (10) bündig mit dem oberen Rand des Behälters (2) abschließt.

11. Vorrichtung (1) nach einem der Ansprüche 5 bis 10, **dadurch gekennzeichnet, dass** der Wulst (10) in einem verschlossenen Zustand der Vorrichtung (1) zumindest bereichsweise zwischen Behälter (2) und Deckel (3) eingeklemmt ist.

12. Vorrichtung (1) nach einem der Ansprüche 1 bis 11, **dadurch gekennzeichnet, dass** der Deckel (3) mehrteilig mit einem Ring (13) und einer Platte (12) ausgebildet ist.

13. Vorrichtung (1) nach einem der Ansprüche 1 bis 12, **dadurch gekennzeichnet, dass** der Deckel (3) innenseitig mit einem Vorsprung (14) und das Element (5) mit einer korrespondierenden Ausnehmung (11) ausgebildet sind, sodass Element (5) und Deckel (3) formschlüssig verbindbar sind.

14. Vorrichtung (1) nach einem der Ansprüche 1 bis 13, **dadurch gekennzeichnet, dass** der Deckel (3) kraftschlüssig, insbesondere durch Verschrauben, mit dem Behälter (2) verbindbar ist.

15. Vorrichtung (1) nach Anspruch 14, **dadurch gekennzeichnet, dass** der mit dem Deckel (3) verbundene Behälter (2) durch das Element (5) luftdicht abgedichtet ist.

16. Vorrichtung (1) nach einem der Ansprüche 1 bis 15, **dadurch gekennzeichnet, dass** der Behälter (2) und der Deckel (3) aus Kunststoff, insbesondere aus einem Thermoplast, gebildet sind.
